# EUROPEAN PATENT APPLICATION

(11) **EP 4 485 654 A1**
(43) Date of publication of application: **01.01.2025**
(21) Application number: 23208627.2
(22) Date of filing: 08.11.2023
(51) Int. Cl.: H01M 50/251, H01M 50/30, F16K 17/40, F16K 17/02

(54) **EXPLOSION VENTING PLATE AND ENERGY STORAGE CABINET**

(30) Priority: 26.06.2023 CN 202321656319 U
(71) Applicant: Sungrow Energy Storage Technology Co., Ltd., Hefei, Anhui 230088 (CN)
(72) Inventor: LIN, Jian, Hefei, 230088 (CN); YAN, Zhen, Hefei, 230088 (CN); BA, Fajian, Hefei, 230088 (CN)
(74) Representative: Rooney, John-Paul

(57) **Abstract**

An explosion venting plate and an energy storage cabinet are disclosed. The explosion venting plate includes a plate body, a thermal insulation member, a gasket and a first seal. The plate body has a slit, and the plate body has a first side and a second side opposite to each other in a thickness direction. The thermal insulation member is arranged on the first side. The gasket is arranged on the second side, and is arranged around a periphery of the plate body and configured to seal the slit on the second side. The first seal is arranged on the first side and configured to seal the slit on the first side. Therefore, the sealing performance of the explosion venting plate is improved and the sealing of the explosion venting plate are relatively stable and reliable.

## Description

### FIELD

The present application relates to the technical field of energy storage devices, and in particular to an explosion venting plate and an energy storage cabinet.

### BACKGROUND

In the related technology, the structure of an explosion venting plate adopts a structure in which a protective film is sandwiched between two bursting discs. During the assembly process, the protective film is easily scratched by the bursting disc, so it is difficult to ensure the sealing performance.

### SUMMARY

The present application aims to at least solve one of technical problems existing in the conventional technology. An object of the present application is to provide an explosion venting plate, and the sealing performance of the explosion venting plate is stable and reliable.

The present application further proposes an energy storage cabinet using the explosion venting plate.

The explosion venting plate according to an embodiment of a first aspect of the present application includes: a plate body, a thermal insulation member, a gasket and a first seal. A slit is formed at the plate body, and the plate body has a first side and a second side opposite to each other in a thickness direction. The gasket is arranged on the second side and configured to seal the slit on the second side. The first seal is arranged on the first side and configured to seal the slit on the first side.

According to the explosion venting plate of the embodiments of the present application, the first seal and the gasket are provided, on the premise of improving the stability and reliability of the fixation of the explosion venting plate, the opening of the slit can be effectively sealed to improve the sealing performance of the explosion venting plate and make the sealing of the explosion venting plate stable and reliable.

According to some embodiments of the present application, the slit include: a first slit, a second slit and a third slit that are connected in sequence, and the first seal includes: a first sealing part, a second sealing part and a third sealing part that are connected in sequence. The first sealing part, the second sealing part and the third sealing part are arranged corresponding to the first slit, the second slit and the third slit.

In some embodiments, the explosion venting plate further includes: a cover and a thermal insulation member. The cover and the thermal insulation member are arranged on the first side, and the cover is configured to accommodate the thermal insulation member.

In an embodiment, the explosion venting plate further includes: a second seal. The second seal surrounds the cover to seal the cover.

In an embodiment, an outer edge of the second seal abuts against an inner edge of the first seal.

In an embodiment, a fixing support is provided on the first side of the plate body, and the fixing support is configured to fix the cover.

According to some embodiments of the present application, the explosion venting plate further includes: a mounting flange. The mounting flange is located on the first side, and the mounting flange is arranged opposite to the gasket.

In an embodiment, an inner edge of the mounting flange abuts against an outer edge of the first seal.

According to some embodiments of the present application, a reinforcing rib is also provided on the second side of the plate body, and the reinforcing rib is spaced apart from the slit.

The energy storage cabinet according to an embodiment of a second aspect of the present application includes: a cabinet body, at least one side plate in the cabinet body is formed as the explosion venting plate described above; or the explosion venting plate is fixed to any side plate of the cabinet body through a mounting flange.

Part of additional aspects and advantages of the present application is set forth in the description which follows, and part is apparent from the description, or may be learned by practice of the present application.

### BRIEF DESCRIPTION OF THE DRAWINGS

The above and/or additional aspects and advantages of the present application become apparent and readily understood from the description of the embodiments in conjunction with the drawings:
Figure 1 is a schematic exploded diagram of an explosion venting plate according to an embodiment of the present application;
Figure 2 is a schematic diagram of an explosion venting plate according to an embodiment of the present application;
Figure 3 is a schematic diagram of a plate body according to an embodiment of the present application; and
Figure 4 is a partial cross-sectional enlarged view of an explosion venting plate according to an embodiment of the present application.

Reference signs in the figures are as follows:
explosion venting plate 100,
plate body 10, thermal insulation member 20, gasket 30, first seal 40, cover 50, second seal 60, fixing support 70, mounting flange 80,
slit 11, first slit 111, second slit 112, third slit 113, reinforcing rib 12, and
first sealing part 41, second sealing part 42, and third sealing part 43.

### DETAILED DESCRIPTION OF EMBODIMENTS

The embodiments of the present application are described in detail below, examples of the embodiments are shown in the drawings, and same or similar reference signs represent same or similar elements or elements with same or similar functions throughout. The embodiments described below by referring to the drawings are exemplary, and are intended to explain the present application, and should not be understood as limitations to the present application.

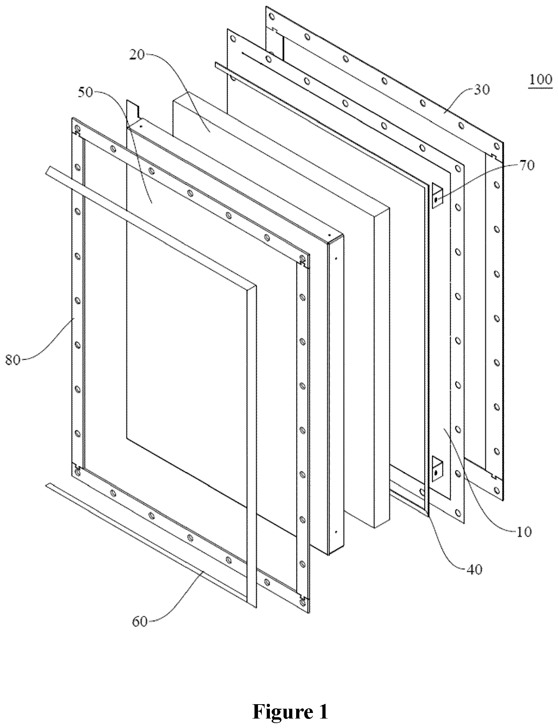

An explosion venting plate 100 and an energy storage cabinet according to the embodiments of the present application are described below with reference to Figures 1 to 4.

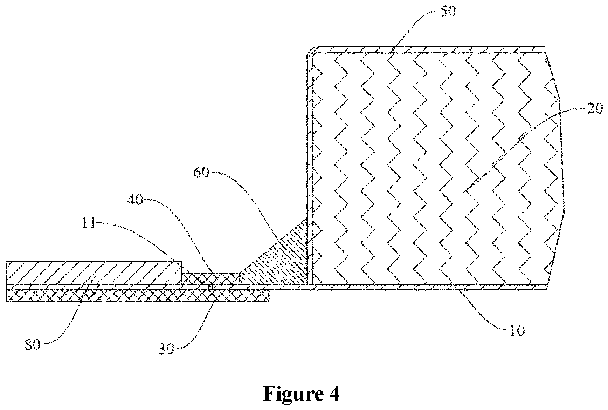

As shown in Figures 1 and 4, the explosion venting plate 100 according to an embodiment of the first aspect of the present application includes: a plate body 10, a thermal insulation member 20, a gasket 30 and a first seal 40.

The plate body 10 has a slit 11. The plate body 10 has a first side and a second side opposite to each other in a thickness direction. The gasket 30 is arranged on the second side and around a periphery of the plate body 10 for sealing the slit 11 on the second side. The first seal 40 is arranged on the first side for sealing the slit 11 on the first side.

Specifically, the gasket 30 and the first seal 40 are respectively located on the second side and the first side of the plate body 10, and are configured to seal the gap in the area of the slit 11 on the first side and the second side of the plate body 10, so as to improve the sealing performance of the explosion venting plate 100.

According to the explosion venting plate 100 of the embodiment of the present application, the first seal 40 and the gasket 30 are provided, the opening of the slit 11 can be effectively sealed on the premise of improving the stability and reliability of the fixation of the explosion venting plate 100, so as to improve the sealing performance of the explosion venting plate 100 and make the sealing of the explosion venting plate 100 stable and reliable.

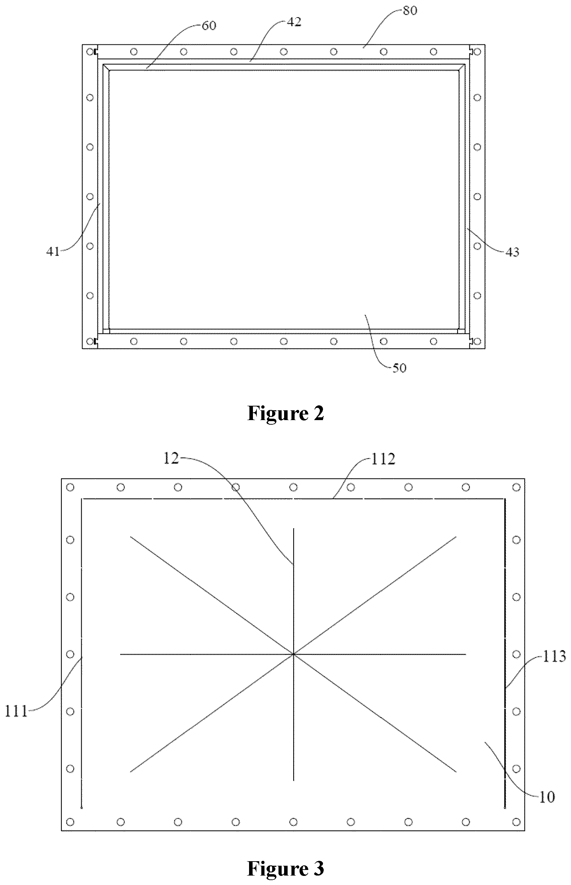

As shown in Figures 2 and 3, according to some embodiments of the present application, the slit 11 include: a first slit 111, a second slit 112 and a third slit 113 that are connected in sequence. The first slit 111 and the third slit 113 are opposite to each other in a first direction of the plate body 10. The second slit 112 extends along a second direction of the plate body 10, and is located at one end of the first slit 111 and the third slit 113 on the same side. The first seal 40 includes: a first sealing part 41, a second sealing part 42 and a third sealing part 43 that are connected in sequence. The first sealing part 41, the second sealing part 42 and the third sealing part 43 are arranged corresponding to the first slit 111, the second slit 112 and the third slit 113. The first direction is orthogonal to the second direction.

The first direction may be a length direction or a width direction, and correspondingly, the second direction is the width direction or the length direction, and both the first direction and the second direction are perpendicular to the thickness direction.

Specifically, the first slit 111, the second slit 112 and the third slit 113 are arranged, so that when the pressure borne by the explosion venting plate 100 exceeds a preset pressure threshold, an opposite side of the second slit 112 is taken as a rotating axis of part of the plate body 10, a turning body is defined by the first slit 111, the second slit and the third slit 113, the turning body is turned over relative to the rotating axis, so as to realize the pressure relief of the explosion venting plate 100. In daily use, the first sealing part 41 seals the first slit 111, the second sealing part 42 seals the second slit 112, and the third sealing part 43 seals the third slit 113, which can effectively improve the sealing performance of the explosion venting plate 100 .

As shown in Figures 1 and 2, in some embodiments, the explosion venting plate 100 further includes: a cover 50 and a thermal insulation member 20. The thermal insulation member 20 and the cover 50 are located on the first side, and the cover 50 is configured to accommodate the thermal insulation member 20.

Specifically, an accommodation cavity is defined by the cover 50 and the plate body 10, and the thermal insulation member 20 is disposed in the accommodation cavity.

That is to say, the thermal insulation member 20 is arranged on the first side of the plate body 10 to improve the thermal-insulation effect of the plate body 10. By providing the thermal insulation member 20, the explosion venting plate 100 has a relatively good thermal-insulation capability, which compensates that a conventional explosion venting plate 100 not having a thermal insulation capability, so that the explosion venting plate 100 can meet the use requirements of an energy storage system, and the applicability of the explosion venting plate 100 is improved.

As a result, the cover 50 is covered on an outer side of the thermal insulation member 20 to fix and limit the thermal insulation member 20, which not only improves the thermal-insulation capability of the thermal insulation member 20, but also improves the structural strength of the explosion venting plate 100 and improves the stability and reliability of the fixation of the thermal insulation member 20.

It should be noted that, the cover 50 may include a base plate opposite to the plate body 10 and a surrounding plate located on the periphery of the base plate. The accommodation cavity is defined by the base plate, the surrounding plate and the plate body 10. The center of the base plate is coaxial with the center of the plate body 10. The overall dimensions of the base plate are smaller than the overall dimensions of the plate body 10, and the base plate is located in the contour of the turning body defined by the first slit 111, the second slit 112 and the third slit 113 to prevent the thermal insulation member 20 from interfering with the turning body, which can improve the working stability and reliability of the explosion venting plate 100.

As shown in Figure 4, the explosion venting plate 100 further includes: a second seal 60. The second seal 60 surrounds the cover 50 to seal the cover 50, that is, to seal a gap between the cover 50 and the plate body 10.

Specifically, the cross section of the second seal 60 is trapezoidal or triangular. The second seal 60 at least has a first surface extending in a thickness direction of the cover 50 and a second surface extending along the first direction or the second direction. The first surface contacts and fits the plate body 10 and the second surface contacts and fits the surrounding plate of the cover 50 to seal the gap between the cover 50 and the plate body 10, which improves the sealing performance. Moreover, the thermal insulation member 20 is enclosed in a closed space, so that the explosion venting plate 100 has a better thermal-insulation capability.

As shown in Figure 4, an outer edge of the second seal 60 abuts against an inner edge of the first seal 40, and an inner edge of a mounting flange 80 abuts against an outer edge of the first seal 40.

In other words, the first seal 40 is located between the second seal 60 and the mounting flange 80, and the first seal 40, the second seal 60 and the mounting flange 80 sequentially abut against each other, which can prevent the first seal 40 and the second seal 60 from moving, so that the sealing capability of the first seal 40 and the second seal 60 can be improved, and stability and reliability of the sealing of the explosion venting plate 100 can be effectively improved.

Specifically, an axis is set at the center of the plate body 10, a direction towards the axis is defined as inward, and a direction away from the axis is defined as outward.

As shown in Figure 1, a fixing support 70 is provided on the first side of the plate body 10. The cover 50 is connected to the plate body 10 through the fixing support 70. Therefore, the stability and reliability of the fixation of the cover 50 on the plate body 10 can be improved, so as to improve the stability and reliability of the fixation of the thermal insulation member 20 on the plate body 10.

As shown in Figure 1 and Figure 2, according to some embodiments of the present application, the explosion venting plate 100 further includes: a mounting flange 80. The mounting flange 80 is located on the first side, and the mounting flange 80 is arranged around a peripheral edge of the plate body 10, and is arranged opposite to the gasket 30.

In this way, the mounting flange 80 is arranged around the peripheral edge of the plate body 10 and is configured to fix the explosion venting plate 100 to a predetermined position, which can improve the stability and reliability of the fixation of the explosion venting plate 100 at the predetermined position. In addition, the mounting flange 80 presses against the gasket 30, so that the gasket 30 has a better sealing capability on the slit, which can further improve the reliability of the sealing of the explosion venting plate 100.

As shown in Figure 3, according to some embodiments of the present application, a reinforcing rib 12 is also provided on the second side of the plate body 10. The number of reinforcing ribs 12 is more than one, and the reinforcing ribs 12 are spaced apart from the slit 11.

Specifically, there are multiple reinforcing ribs 12, and the multiple reinforcing ribs may be in various shapes such as a shape of " 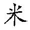 " or a shape of " 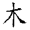 ". Through the arrangement of the reinforcing ribs 12, the structural strength of the explosion venting plate 100 can be improved. The reinforcing ribs 12 are spaced apart from the slit 11, so that the situation that the area of the slit 11 cannot be collapsed and deformed in time caused by the arrangement of the reinforcing ribs 12 can be prevented, so as to improve the explosion venting reliability of the explosion venting plate 100.

An energy storage cabinet according to an embodiment of the second aspect of the present application includes: a cabinet body, at least one side plate in the cabinet body is formed as the explosion venting plate 100 described above; or the explosion venting plate 100 described above is fixed to any side plate of the cabinet body through the mounting flange 80. The technical effects of the energy storage cabinet are consistent with the technical effects of the explosion venting plate 100, which is not repeated here.

In the description of the present application, it should be understood that, orientations or positional relationships indicated by terms such as "center", "longitudinal direction", "transverse direction", "length", "width", "thickness", "up", "down", "front", "back", "left", "right", "vertical", "horizontal", "top", "bottom", "inside", "outside", "clockwise", "counterclockwise", "axial direction", "radial direction" are based on the orientations or position relationships shown in the drawings, and are only for the convenience of describing the present application and simplifying the description, rather than indicating or implying that devices or elements referred to must have specific orientations, or must be constructed and operated in specific orientations, and thus should not be understood as limitations to the present application.

In the description of the present application, "first feature" or "second feature" may include one or more of the features.

In the description of the present application, "multiple" means two or more.

In the description of the present application, the first feature being "on" or "under" the second feature may include the first feature directly contacting the second feature, and may also include the first feature not directly contacting the second feature but contacting through another feature between the first and second features.

In the description of the present application, the first feature being "on", "above" and "over" the second feature includes that the first feature is directly above and obliquely above the second feature, or simply indicate that the first feature is horizontally higher than the second feature.

In the description of the specification, descriptions that refer to terms such as "an embodiment", "some embodiments", "illustrative embodiments", "examples", "specific examples", or "some examples" mean that the specific features, structures, materials, or characteristics described in conjunction with the embodiment or example are included in at least one embodiment or example of the present application. In the specification, the schematic representations of the above terms do not necessarily refer to the same embodiment or example. Furthermore, the specific features, structures, materials, or characteristics described may be combined in any appropriate manner in any one or more embodiments or examples.

Although the embodiments of the present application have been shown and described, those skilled in the art can understand that various changes, modifications, substitutions and variations can be made to these embodiments without departing from principles and purposes of the present application. The scope of the present application is defined by the claims and the equivalents thereof.

## Claims

1. An explosion venting plate, comprising:
a plate body (10), wherein a slit (11) is formed in the plate body (10), the plate body (10) has a first side and a second side opposite to each other in a thickness direction;
a gasket (30), wherein the gasket (30) is arranged on the second side and is configured to seal the slit (11) on the second side; and
a first seal (40), wherein the first seal (40) is provided on the first side and is configured to seal the slit (11) on the first side.

2. The explosion venting plate according to claim 1, wherein
the slit (11) comprises: a first slit (111), a second slit (112) and a third slit (113) that are connected in sequence; and
the first seal (40) comprises: a first sealing part (41), a second sealing part (42) and a third sealing part (43) that are connected in sequence, the first sealing part (41), the second sealing part (42) and the third sealing part (43) are arranged corresponding to the first slit (111), the second slit (112), and the third slit (113).

3. The explosion venting plate according to claim 1, further comprising: a cover (50) and a thermal insulation member (20), wherein
the cover (50) and the thermal insulation member (20) are arranged on the first side, and the cover (50) is configured to accommodate the thermal insulation member (20).

4. The explosion venting plate according to claim 3, further comprising: a second seal (60), wherein the second seal (60) surrounds the cover (50) to seal the cover (50).

5. The explosion venting plate according to claim 4, wherein an outer edge of the second seal (60) abuts against an inner edge of the first seal (40).

6. The explosion venting plate according to claim 3, wherein a fixing support (70) is provided on the first side of the plate body (10), and the fixing support (70) is configured to fix the cover (50).

7. The explosion venting plate according to claim 1, further comprising: a mounting flange (80), wherein the mounting flange (80) is located on the first side, the mounting flange (80) is arranged opposite to the gasket (30).

8. The explosion venting plate according to claim 7, wherein an inner edge of the mounting flange (80) abuts against an outer edge of the first seal (40).

9. The explosion venting plate according to claim 1, wherein a reinforcing rib (12) is also provided on the second side of the plate body 10, and the reinforcing rib (12) is spaced apart from the slit (11).

10. An energy storage cabinet, comprising: a cabinet body, wherein
at least one side plate in the cabinet body is formed as the explosion venting plate according to any one of claims 1 to 9; or
the explosion venting plate according to any one of claims 1 to 9 is fixed to any side plate of the cabinet body through a mounting flange (80).
